# EUROPEAN PATENT SPECIFICATION

(11) **EP 4 249 535 B1**
(45) Date of publication and mention of the grant of the patent: **05.11.2025**
(21) Application number: 21884309.2
(22) Date of filing: 25.02.2021
(51) Int. Cl.: C08G 63/60, C08G 63/87, C09K 19/46, C08L 67/00, C08K 7/14, C08K 3/34, C08K 3/22, C09K 19/38, C08G 63/80

(54) **LIQUID CRYSTAL POLYESTER, (LCP), LCP COMPOSITION, AND USE THEREOF**
FLÜSSIGKRISTALLPOLYESTER, (LCP), LCP-ZUSAMMENSETZUNG UND VERWENDUNG DAVON
POLYESTER À CRISTAUX LIQUIDES, (LCP), COMPOSITION DE LCP, ET UTILISATION ASSOCIÉE

(30) Priority: 30.10.2020 CN 202011199975
(43) Date of publication of application: 27.09.2023
(73) Proprietor: KINGFA SCI. & TECH. CO., LTD., Guangzhou, Guangdong 510663 (CN); Zhuhai Vanteque Specialty Engineering Plastics Co., Ltd., Zhuhai, Guangdong 519050 (CN)
(72) Inventor: XING, Yuxiong, Guangzhou, Guangdong 510663 (CN); XIAO, Zhongpeng, Guangzhou, Guangdong 510663 (CN); HUANG, Xianbo, Guangzhou, Guangdong 510663 (CN); YE, Nanbiao, Guangzhou, Guangdong 510663 (CN); JIANG, Sujun, Guangzhou, Guangdong 510663 (CN)
(74) Representative: Michalski Hüttermann & Partner Patentanwälte mbB
(86) International application number: PCT/CN2021/077961
(87) International publication number: WO 2022/088565

(56) References cited:
- WO-A1-2020/003690
- WO-A1-2020/204125
- WO-A1-2020/204125
- WO-A1-2020/204125
- CN-A- 103 570 927
- CN-A- 104 725 619
- CN-A- 105 837 808
- CN-A- 108 276 567
- CN-A- 108 276 567
- CN-A- 110 903 612
- CN-A- 112 250 846
- JP-A- 2015 124 276
- JP-A- 2015 124 276
- JP-A- H08 134 195
- US-A- 4 684 712
- US-A- 5 454 910

## Description

### TECHNICAL FIELD

The present disclosure relates to the technical field of liquid crystal polymers, and in particular relates to a liquid crystal polyester (LCP), an LCP composition, and use thereof.

### BACKGROUND

As a group of high-performance special engineering plastics, LCPs are widely used in fields such as electronics and small precision thin-walled components. With the development of small thin and light electronics, the intensification of integrated circuits (ICs), and especially the application of surface-mount technology (SMT), advanced requirements have been put forward for heat resistance of LCP materials, and LCP materials need to have a solder-resistant temperature of not lower than 260°C.

In order to improve the heat resistance of LCPs, many attempts have been made by those skilled in the art. CN 108026258 A describes a wholly-aromatic polyester that includes specific structural units each at a content in a specific range and a ketonic bond at a content in a specific range. The wholly-aromatic polyester is a liquid crystal polymer, which fully balances a low melting point and heat resistance and has an excellent color tone and a heat deflection temperature (HDT) of 245°C to 260°C. CN 108026269 A describes a wholly-aromatic polyesteramide (PEA) that includes specific structural units each at a content in a specific range and a ketonic bond at a content in a specific range. The wholly-aromatic PEA is a liquid crystal polymer, which fully balances a low melting point and heat resistance and has an HDT of 245°C to 270°C. CN 109561791 A describes a heat-resistant ware prepared with a material obtained by adding talc and other fillers to an LCP resin. The heat-resistant ware can have an HDT of 270°C or higher. JP 2015 123276 A describes a liquid crystalline polyester resin composition containing 100 pts.wt. of a liquid crystalline polyester (A) having following structural units (I), (II), (III), (IV) and (V) and 10 to 200 pts.wt. of a filler (B).

So far, there has been no report on the development of a formula and preparation method of a high-melting-enthalpy LCP to allow high heat resistance of the LCP and a composition thereof.

### SUMMARY

An objective of the present disclosure is to overcome the limitations of the prior art and provide a new technical solution. That is, the present disclosure provides an LCP, an LCP composition, and use thereof. The LCP and the LCP composition have improved heat resistance.

The invention is defined by the features of the independent claim.

To achieve the objective above, the technical solutions of the present disclosure are as follows:
The present disclosure provides an LCP including a repeating unit of formula (1), a repeating unit of formula (2), and a repeating unit of formula (3):

(1) -O-Ar¹-CO-;

(2) -CO-Ar²-CO-;

and

(3) -O-Ar³-O-;

the liquid crystal polyester comprises the following repeating units in mole percentages:
   (A) the repeating unit of formula (1), wherein Ar¹ is 2,6-naphthylene: 45 mol% to 65 mol%;
   (B) the repeating unit of formula (1), wherein Ar¹ is 1,4-phenylene: 1 mol% to 6 mol%;
   (C) the repeating unit of formula (2), wherein Ar² is 1,4-phenylene: 15 mol% to 26 mol%;
and (D) the repeating unit of formula (3), wherein Ar³ is 4,4'-biphenylene: 15 mol% to 26 mol%; and
the LCP has a melting enthalpy of over 1.5 J/g, where the melting enthalpy is obtained by calculating a melting peak area from a second melting curve obtained by differential scanning calorimetry (DSC).

The melting enthalpy is often used to characterize an energy required for a melting process of a plastic product. The orderliness of arrangement of molecular chains, the compactness of stacking of lattices, and the difficulty of movement of molecular chain segments and crystals of an LCP polymer can all be reflected by the melting enthalpy. The inventors have found through research that the LCP includes the above specific repeating units; and when the LCP has a melting enthalpy of over 1.5 J/g, the LCP has an HDT of higher than 290°C and exhibits excellent anti-bubbling performance.

Furthermore, the LCP includes the following repeating units in mole percentages:
(A) the repeating unit of formula (1), where Ar¹ is 2,6-naphthylene: 45 mol% to 60 mol%;
(B) the repeating unit of formula (1), where Ar¹ is 1,4-phenylene: 1 mol% to 5 mol%;
(C) the repeating unit of formula (2), where Ar² is 1,4-phenylene: 19 mol% to 26 mol%; and
(D) the repeating unit of formula (3), where Ar³ is 4,4'-biphenylene: 19 mol% to 26 mol%.

An LCP prepared within the above ranges has high heat resistance, excellent anti-bubbling performance, and a low dielectric loss, and is suitable for high-frequency communication electronic components.

The present disclosure also provides a preparation method of the LCP, including the following steps:
S1. subjecting a monomer of the repeating unit of formula (1), a monomer of the repeating unit of formula (3), and an acylating agent to an acylation reaction under catalysis of an ionic liquid (IL);
S2. subjecting a product of the acylation reaction of S1 and a monomer of the repeating unit of formula (2) to melt polycondensation and vacuum polycondensation under catalysis of the IL to obtain a prepolymer, where during the melt polycondensation, a constant temperature of 280°C to 300°C is maintained for 15 min or more and preferably 15 min to 30 min from the perspective of production efficiency and energy consumption; and
S3. discharging, cooling, curing, and granulating the prepolymer, and conducting solid-state polymerization (SSP) to obtain the LCP,
where the IL is obtained through a reaction between a heterocyclic organic base compound with two or more nitrogen atoms and an anionic functional compound, and an amount of the ionic liquid is 500 ppm or more of a theoretical yield of the liquid crystal polyester.

In the present disclosure, an IL is introduced as a high-efficiency catalyst at an early stage of a reaction to prepare the LCP. The IL catalyst exhibits high-efficiency selective catalysis, showing significant catalytic effects. It exhibits high acylation efficiency during reactions while reducing side reactions such as molecular chain branching and cross-linking. This promotes the formation of polymer structures with well-ordered molecular segments, and thus facilitates crystal growth and the formation of crystalline regions, resulting in a liquid crystal polymer with higher melting enthalpy.

In addition, maintaining a constant temperature of 280°C to 300°C for 15 min or more, and preferably 15 min to 30 min, during the melt polycondensation can facilitate the thorough polymerization of the monomer of the repeating unit of formula (2) and reduce the loss of the monomer of the repeating unit of formula (2). This leads to an improved degree of molecular segment organization in the LCP, making it easier to form crystalline structures and resulting in a LCP with high melting enthalpy characteristics.

Further, an amount of the IL added is 500 ppm or more and preferably 500 ppm to 3,000 ppm (from the perspective of economy) of a theoretical yield of the LCP, and in this range, an acylation rate is high, which is conducive to improvement of the melting enthalpy, HDT, and anti-bubbling performance of the LCP.

The "theoretical yield of the LCP" in the present disclosure refers to a theoretical yield of the LCP synthesized from the monomer of the repeating unit of formula (1), the monomer of the repeating unit of formula (2), the monomer of the repeating unit of formula (3), and the acylating agent through the acylation reaction, melt polycondensation, vacuum polycondensation, and SSP under an action of the IL.

Further, the heterocyclic organic base compound with two or more nitrogen atoms is selected from the group consisting of an imidazole compound, a triazole compound, and a bipyridyl compound, where the imidazole compound is selected from the group consisting of 1-methylimidazole, 2-methylimidazole, 4-methylimidazole, 1-ethylimidazole, 2-ethylimidazole, 4-ethylimidazole, 1,2-dimethylimidazole, 1,4-dimethylimidazole, and 2,4-dimethylimidazole, and is preferably 1-methylimidazole; the triazole compound includes, but is not limited to, at least one selected from the group consisting of 1,2,4-triazole, 1,2,3-triazole, and benzotriazole (BTA); and the bipyridyl compound includes, but is not limited to, at least one selected from the group consisting of 2,2'-bipyridyl and 4,4'-bipyridyl.

Further, the anionic functional compound is selected from the group consisting of acetic acid, propionic acid, and butyric acid, and is preferably acetic acid.

Furthermore, the IL is imidazole acetate; and a preparation method of the imidazole acetate is as follows: stirring a mixture of an imidazole compound and acetic acid at 80°C to allow a reaction for 24 h, where the imidazole compound is preferably 1-methylimidazole, and accordingly, after the reaction is completed, a 1-methylimidazole acetate IL is obtained.

Further, a monomer of a repeating unit of formula (1) is shown in formula (1'), a monomer of a repeating unit of formula (2) is shown in formula (2'), and a monomer of a repeating unit of formula (3) is shown in formula (3'):

(1') G¹-O-Ar¹-CO-G²,

(2') G²-CO-Ar²-CO-G²,

and

(3') G¹-O-Ar³-O-G¹,

where Ar¹ is at least one selected from the group consisting of 2,6-naphthylene, 1,4-phenylene, and 4,4'-biphenylene; Ar² is selected from the group consisting of 1,4-phenylene, 1,3-phenylene, and 4,4'-biphenylene; Ar³ is selected from the group consisting of 2,6-naphthylene, 1,4-phenylene, 1,3-phenylene, and 4,4'-biphenylene; the three G¹ groups each are independently selected from the group consisting of a hydrogen atom and alkylcarbonyl; and the three G² groups each are independently selected from the group consisting of hydroxyl, alkoxy, aryloxy, alkylcarbonyloxy, and a halogen atom.

Further, the monomer of the repeating unit of formula (1) is preferably at least one selected from the group consisting of 4-hydroxybenzoic acid (HBA) and 6-hydroxy-2-naphthoic acid (HNA);
the monomer of the repeating unit of formula (2) is preferably at least one selected from the group consisting of terephthalic acid (TA), isophthalic acid (IA), and 4,4'-biphenyldicarboxylic acid, and is further preferably TA; and
the monomer of the repeating unit of formula (3) is preferably at least one selected from the group consisting of hydroquinone and 4,4'-dihydroxybiphenyl.

Further, a molar ratio of a functional group in the acylating agent that can acylate hydroxyl to total hydroxyl in the monomer of the repeating unit of formula (1) and the monomer of the repeating unit of formula (3) is 1.01:1 to 1.10:1; and a temperature of the acylation reaction is controlled at 120°C to 150°C to ensure that the acylation reaction is fully conducted, thereby improving an acylation rate.

In the present disclosure, a conventional acylating agent may be adopted, such as acetic anhydride, propionic anhydride, butyric anhydride, and valeric anhydride.

Further, during the melt polycondensation in S2, a temperature is raised at a heating rate of 0.3°C/min to 1.5°C/min to 280°C to 300°C, and the temperature of 280°C to 300°C is maintained for 15 min to 30 min; and finally, the temperature is raised at a heating rate of 0.3°C/min to 1.5°C/min to a temperature of between 10°C below the melting point of the target product and 30°C above the melting point of the target product ([Tₘ-10]°C to [Tₘ+30]°C), during which acetic acid and by-products thereof are continuously distilled out.

To prevent high viscosity of the prepolymer in the molten state, which can hinder its discharge,, the melt viscosity of the prepolymer is controlled within the range of 1 Pa.s to 10 Pa.s. The melt viscosity is measured with a Dynisco LCR7000 capillary rheometer, with a testing temperature set at 30°C above the melting point of the LCP. The shear rate is set at 1,000 s⁻¹ , and the measurement is conducted using an inner diameter of 1 mm and a length of 40 mm for the die.

Further, during the vacuum polycondensation in S2, the target vacuum level is 40 kPa to 0.1 kPa; the duration of the vacuum polycondensation is controlled to be within 3 h. Ultimately, during the discharge process, the temperature of the discharged prepolymer melt is controlled at a temperature of between 5°C below the melting point of the target product and 30°C above the melting point of the target product ([Tₘ+5]°C to [Tₘ+30]°C).

In S3, a device used for the discharge of the prepolymer can be selected from the group consisting of a valve, an extruder, and a gear pump, and the discharge of the prepolymer is preferably conducted in an inert atmosphere such as a nitrogen atmosphere. The prepolymer is cooled and continuously conveyed in one direction. Downstream in the conveying direction, a wire cutting machine, a sheet cutting machine, or a crushing machine can be used for cutting or crushing to obtain a prepolymer particle or powder with a particle size of preferably 0.1 mm to 5 mm. In the solid-phase polymerization stage, it is preferable to conduct the process at a vacuum level of 0.1 Pa to 50 kPa, or under an inert protective gas such as nitrogen. The polymerization temperature ranges from 20°C to 340°C, and the reaction time is between 0.5 h and 40 h to ensure a thorough reaction. Solid-phase polymerization can be conducted in a stirring state or a static state without stirring.

In the present disclosure, an IL is used as a high-efficiency catalyst, and reaction conditions of the acylation reaction, melt polycondensation, vacuum polycondensation, and SSP are optimized, such that the synthesized LCP has a melting enthalpy of over 1.5 J/g. In order to improve the heat resistance of the LCP, the melting point of the LCP should be as high as possible. However, considering the discharge properties of the prepolymer and the heating capacity of the polymerization device, the melting point of the prepolymer is preferably below 365°C, more preferably above 200°C and below 360°C, and further more preferably above 270°C and below 360°C. The melting point is determined by DSC. A test sample is heated at a heating rate of 20°C/min from room temperature to a maximum temperature of 20°C to 80°C above the melting point, kept at the maximum temperature for 2 min, cooled at a cooling rate of 20°C/min to room temperature, kept at room temperature for 2 min, and then heated at a heating rate of 20°C/min to the maximum temperature of 20°C to 80°C above the melting point to obtain a second melting curve of the test sample. The melting point is the peak temperature of the melting peak.

The present disclosure also provides an LCP composition, including the following components in parts by weight:

| | |
|---|---|
| the LCP described above | 50 to 80 parts and |
| a reinforcing filler | 20 to 50 parts. |

The LCP of the present disclosure exhibits a high melting enthalpy. When the reinforcing filler is added to the LCP, the resulting composite also possesses a high melting enthalpy characteristics, demonstrating excellent heat deformation temperature and anti-foaming performance. Within the aforementioned composition range, the LCP composition preferably has a melting enthalpy of over 1.0 J/g. The melting enthalpy is determined by measuring the second melting curve using DSC and calculating the area under the melting peak.. The LCP composition has a HDT of higher than 290°C. A test sample is prepared into an 80 mm × 10 mm × 4 mm specimen through injection molding, and an HDT of the specimen is determined at a heating rate of 2°C/min under a load of 1.82 MPa, following the ISO 75-2 2013 standard.

In addition, when the LCP and the reinforcing filler are used at amounts in the above ranges, a prepared LCP composition has excellent heat resistance and mechanical performance, such as tensile strength.

Further, the reinforcing filler includes at least one selected from the group consisting of a fibrous reinforcing filler and a non-fibrous reinforcing filler.

The non-fibrous reinforcing filler includes at least one selected from the group consisting of a flaky reinforcing filler and a granular reinforcing filler.

The fibrous reinforcing filler has an average length of preferably 20 µm to 2,000 µm. When the size of the fibrous reinforcing filler is in this range, the LCP composition can have both excellent HDT and excellent mechanical tensile performance. The fibrous reinforcing filler includes, but is not limited to, one or more selected from the group consisting of a glass fiber, a potassium titanate fiber, a metal-coated glass fiber, a ceramic fiber, a wollastonite fiber, a metal carbide fiber, a metal cured fiber, an asbestos fiber, an alumina fiber, a silicon carbide fiber, a plaster fiber, and a boron fiber, and is preferably a glass fiber.

The non-fibrous reinforcing filler has an average particle size of preferably 0.01 µm to 100 µm. When the average particle size of the non-fibrous reinforcing filler is greater than 100 µm, the anti-bubbling performance of the LCP composition deteriorates. The non-fibrous reinforcing filler is one or more selected from the group consisting of talc, mica, titanium dioxide, a potassium titanate whisker (PTW), a zinc oxide whisker, an aluminum borate whisker (ABW), carbon black, gypsum, asbestos, zeolite, sericite, kaolin, montmorillonite (MMT), clay, lithium montmorillonite (Li-MMT), synthetic mica, an aluminosilicate, silica, titanium oxide, alumina, zinc oxide, zirconium oxide, iron oxide, calcium carbonate, magnesium titanate, dolomite, aluminum sulfate, barium sulfate, magnesium sulfate, calcium carbonate, a quartz powder, magnesium hydroxide, calcium hydroxide, aluminum hydroxide, a glass bead, a ceramic bead, boron nitride, and silicon carbide.

Further, in a range that does not compromise the heat resistance of the present disclosure, the LCP composition can be used in combination with a processing aid such as an antioxidant, a heat stabilizer, an ultraviolet (UV) absorber, a lubricant, a release agent, a coloring agent, a plasticizing agent, or an antistatic agent; or the LCP composition can be used in combination with an LCP with another structure or a polymer other than an LCP, where the LCP with another structure or the polymer other than an LCP may be one or more selected from the group consisting of a wholly-aromatic or semi-aromatic thermotropic liquid crystal polymer (TLCP), an aromatic or semi-aromatic polyamide (PA), polyether ether ketone (PEEK), polyethersulfone (PES), and a polyolefin (PO) homopolymer or copolymer. Through the above combinations, the LCP composition can be further given desired characteristics.

The present disclosure has no specific limitation on a manner of mixing of the LCP, the reinforcing filler, and the processing aid, and dry-blending, solution blending, melt blending, or the like may be adopted, where the melt blending is preferred, and the melt blending is conducted at a temperature between a melting point of the LCP and a temperature 50°C higher than the melting point of the LCP (Tₘ°C to [Tₘ+50]°C). A device for the mixing may be selected from the group consisting of a kneading machine, a single-shaft or twin-shaft extruder, and a rubber roller machine, and a twin-shaft extruder may be preferred.

The above compounding may be conducted as follows: the LCP, reinforcing filler, and processing aid are fed together through a rear feeder for compounding; or the LCP and processing aid are fed through a rear feeder and the reinforcing filler is fed through a side feeder for compounding; or a high-concentration LCP composition masterbatch including the LCP and processing aid can be first prepared and then mixed with the LCP and reinforcing filler for compounding to obtain an LCP composition with a required concentration.

The LCP composition of the present disclosure can be prepared into a melt-molded product by a preparation process well known in the art such as injection molding, injection compression molding, compression molding, extrusion molding, blow molding, press molding, or spinning. The molded product here can be an injection-molded product, an extrusion-molded product, a press-molded product, a sheet, or a tube; a film product such as an unstretched film, an uniaxially-stretched film, or a biaxially-stretched film; or a fiber yarn such as an unstretched yarn or a super-stretched yarn. The effect of the present disclosure may be significantly obtained through injection molding of the LCP composition.

The present disclosure also provides use of the LCP composition described above in fields of automobiles, home appliances, communication devices, and electronics. A product prepared from the LCP or the LCP composition of the present disclosure may have the following applications: various gears, various housings, sensors, light-emitting diodes (LEDs), connectors, sockets, resistors, relay housings, relay bases, winding shafts for relays, switches, coiled shafts, capacitors, variable capacitor housings, optical pickups, resonators, various terminal boards, transformers, plugs, printed wiring boards (PWBs), tuners, speakers, microphones, head-mounted earphones, midget motors, magnetic bases, power modules, shells, semiconductors, liquid crystal display (LCD) components, FDD brackets, FDD chassises, HDD components, motor brush holders, parabolic antennas, and computer-associated components; VTR components, TV components, smoothing irons, hair dryers, electric cooker components, microwave oven components, audio electronic components, audio components, laser discs, optical discs, lighting components, refrigerator components, air-conditioning components, typewriter components, and word-processing machines; office computer-associated components, telephone-associated components, fax machine-associated components, copy machine-associated components, and fixtures for washing; oil-free bearings, stern bearings, and bearings used in water; motor components; igniters and typewriters; microscopes, binocular telescopes, cameras, and clocks; precision machinery-associated components; alternating-current (AC) generator terminals, AC generator connectors, IC regulators, and potentiometer bases for dimmers; various valves such as exhaust valves; various pipes of fuel association systems, exhaust systems, and suction systems; intake nozzle vent pipes, intake manifolds, fuel pumps, engine cooling water connectors, vaporizer bodies, and vaporizer separators; exhaust gas sensors, cooling water sensors, oil temperature sensors, throttle position sensors, crankshaft position sensors, air flow meters, and brake pad wear sensors; and thermostat bases for air conditioning, motor insulators for air conditioning, motor insulators for electric windows or the like, control valves for warm air flows of heaters, brush holders for radiator motors, water pump impellers, turbine blades, wiper motor-associated components, distributors, starter switches, starter relays, wiring harnesses for transmissions, window washer jets, switch substrates for air-conditioning panels, coils for fuel-associated solenoid valves, connectors for fuses, speaker terminals, insulation boards for electrical components, stepper motor rotors, lamp rings, lamp holders, light reflectors, lamp housings, brake pistons, solenoid spools, engine oil filters, and ignition device housings. The product prepared from the LCP or the LCP composition of the present disclosure is particularly useful in PWBs and small thin-walled electronic devices.

Compared with the prior art, the present disclosure has the following beneficial effects:
The LCP and the composition comprising the LCP of the present disclosure have a high melting enthalpy and a high HDT, exhibit excellent heat resistance and anti-foaming performance, and is suitable for application in fields of automobiles, home appliances, communication devices, and electronics.

### DETAILED DESCRIPTION

In order to better illustrate the objective, technical solutions, and advantages of the present disclosure, the present disclosure will be further described below in conjunction with specific examples.

The raw materials in the following examples and comparative examples are as follows:
HNA: 6-hydroxy-2-naphthoic acid, Sigma-Aldrich;
BP: 4,4'-dihydroxybiphenyl, Sigma-Aldrich;
TA: terephthalic acid, Sigma-Aldrich;
HBA: 4-hydroxybenzoic acid, Sigma-Aldrich;
IA: isophthalic acid, Sigma-Aldrich;
APAP: acetaminophen, Sigma-Aldrich;
magnesium acetate: Sigma-Aldrich;
the glass fiber, talc, mica powder, and titanium dioxide are all commercially available; and the 1-methylimidazole acetate IL is self-made, and a specific preparation method is as follows: 1-methylimidazole and acetic acid are mixed and stirred at 80°C to allow a reaction for 24 h to obtain the 1-methylimidazole acetate IL.

The methods for determining a melting temperature, a melting enthalpy, a melt viscosity, an HDT, and anti-bubbling performance in the present disclosure are described as follows:
(1) Melting temperature: The melting temperature is measured by DSC 200 F3 of NETZSCH. A test sample is heated at a heating rate of 20°C/min from room temperature to a maximum temperature of melting point + (20-80)°C, kept at the maximum temperature for 2 min, then cooled at a cooling rate of 20°C/min to room temperature, then kept at room temperature for 2 min, and then heated at a heating rate of 20°C/min to the maximum temperature of melting point + (20-80)°C, such that a second melting curve of the polymer is obtained; and then a melting peak is selected as a melting point.
(2) Melting enthalpy: A melting start temperature and a melting end temperature of the melting peak are determined according to the second melting curve obtained in (1), and a melting peak area is calculated as the melting enthalpy.
(3) Melt viscosity: The melt viscosity is tested with a Dynisco LCR7000 capillary rheometer at a test temperature 30°C higher than a melting point of the LCP and a shear rate of 1,000 s⁻¹ through a mouth model with an inner diameter of 1 mm and a length of 40 mm.
(4) HDT: A test sample is prepared into an 80 mm × 10 mm × 4 mm specimen through injection molding, and an HDT of the specimen is determined at a heating rate of 2°C/min under a load of 1.82 MPa according to the ISO 75-2 2013 standard.
(5) Anti-bubbling performance: At a temperature 5°C higher than the melting point of the LCP and an injection speed of 60 mm/s, the LCP or the composition thereof is molded into a thin sheet specimen with a thickness of 1.0 mm, a length of 60 mm, and a width of 60 mm; and 10 of resulting specimens are placed in a 260°C oven for 5 min and then taken out, and bubbling conditions on a surface of each specimen are observed. The anti-bubbling performance is measured by a bubbling rate, and the bubbling rate = a number of bubbled specimens/a total number of specimens * 100%. The lower the bubbling rate, the better the anti-bubbling performance.

### Examples 1 to 8 and Comparative Examples 1 to 8: LCPs

Raw material components of the LCPs in Examples 1 to 8 and Comparative Examples 1 to 8 were shown in Table 1. A preparation method of the LCP included the following steps:
S1. Acylation working section: Monomers, acetic anhydride, and a catalyst were added to a first reaction vessel equipped with a stirrer, a monomer feed port, a reflux condenser, a temperature meter, and a nitrogen inlet port, and after the feeding was completed, an atmosphere in the reaction vessel was completely replaced with nitrogen; and a reaction system was heated to 140°C under protection of nitrogen, and subjected to reflux at this temperature for 2 h to allow an acylation reaction.
S2. Melt polycondensation working section: After the acylation reaction was completed, a resulting material was transferred to a second reaction vessel equipped with stirrer with a torque sensor, a protective gas inlet port, a discharge unit, and a vacuum unit, stirred, heated at a heating rate of 1°C/min to 280°C to 300°C, kept at the temperature of 280°C to 300°C for a specified time, and then heated at a heating rate of 1°C/min to 360°C, during which acetic acid produced after polymerization was discharged through the discharge unit.
S3. Vacuum polycondensation working section: After a temperature of the material reached 360°C, a pressure in the second reaction vessel was reduced to 10 kPa within 30 min.
S4. After the torque reached a set value, nitrogen was introduced through the protective gas inlet port until a pressure in the second reaction vessel reached 0.3 MPa, and then a prepolymer was discharged in a molten state through a discharge port of the second reaction vessel. The prepolymer was cooled, cured, granulated, and fed into a rotary drum to undergo SSP at a temperature of 290°C and a vacuum level of 100 Pa or lower until the desired melt viscosity is achieved. Then, cooling is performed to obtain an LCP.

The raw material components, synthesis process parameters, melt viscosities, melting points, melting enthalpies, HDTs, and bubbling rates of the LCPs in Examples 1 to 8 and Comparative Examples 1 to 8 were shown in Table 1.

**Table 1**

| Example/Co mparative Example | | Ex am ple 1 | Ex am ple 2 | Ex am ple 3 | Ex am ple 4 | Ex am ple 5 | Ex am ple 6 | Ex am ple 7 | Ex am ple 8 | Com parat ive Exa mple 1 | Com parat ive Exa mple 2 | Com parat ive Exa mple 3 | Com parat ive Exa mple 4 | Com parat ive Exa mple 5 | Com parat ive Exa mple 6 | Com parat ive Exa mple 7 | Com parat ive Exa mple 8 |
|---|---|---|---|---|---|---|---|---|---|---|---|---|---|---|---|---|---|
| | LCP name | 1 | 2 | 3 | 4 | 5 | 6 | 7 | 8 | 9 | 10 | 11 | 12 | 13 | 14 | 15 | 16 |
| Mo no mer of a rep eati ng unit of for mul a (1) | HNA( g) | 26 13 | 31 70 | 37 19 | 31 70 | 31 70 | 31 48 | 31 85 | 31 70 | 3170 | 3170 | 3170 | 4260 | 2331 | - | 1901 | 226 |
| Mo no mer of a rep eati ng unit of for mul a (3) | BP(g) | 14 65 | 11 69 | 87 8 | 11 69 | 11 69 | 12 46 | 11 17 | 11 69 | 1169 | 1169 | 1169 | 590 | 1615 | 1376 | 0 | 409 |
| Mo no mer of a rep eati ng unit of for mul a (2) | TA(g) | 13 07 | 10 43 | 78 3 | 10 43 | 10 43 | 11 12 | 99 7 | 10 43 | 1043 | 1043 | 1043 | 527 | 1441 | 921 | 0 | 565 |
| Mo no mer of a rep eati ng unit of for mul a (1) | HBA( g) | 17 0 | 16 9 | 16 8 | 16 9 | 16 9 | 42 | 25 5 | 16 9 | 169 | 169 | 169 | 167 | 171 | 3062 | 3773 | 1657 |
| Mo no mer of a rep eati ng unit of for mul a (2) | IA(g) | - | - | - | - | - | - | - | - | - | - | - | | | 307 | - | |
| Oth er mo no mer s | APAP( g) | - | - | - | - | - | - | - | - | - | - | - | - | - | - | - | 181 |
| Cat alys t | 1-meth ylimid azole acetate IL (ppm) | 50 0 | 50 0 | 50 0 | 50 0 | 30 00 | 50 0 | 50 0 | 50 0 | - | 300 | 500 | 500 | 500 | 500 | 500 | 500 |
| Cat alys t | Magne sium acetate (ppm) | - | - | - | - | - | - | - | - | 1500 | - | - | - | - | - | - | |
| Acylation rate (%) | | 99. 2 | 99. 3 | 99. 0 | 99. 4 | 99. 3 | 99. 4 | 99. 3 | 99. 2 | 92.3 | 87.3 | 99.1 | 99.2 | 99.0 | 99.2 | 99.3 | 99.2 |
| Constant temperature (°C) | | 28 0 | 28 0 | 28 0 | 28 0 | 28 0 | 28 0 | 28 0 | 30 0 | 280 | 280 | 280 | 280 | 280 | 280 | 280 | 280 |
| Constant temperature holding time (min) | | 30 | 30 | 30 | 15 | 30 | 30 | 30 | 30 | 30 | 30 | 0 | 30 | 30 | 30 | 30 | 30 |
| Melting point of a prepolymer (°C) | | 34 2 | 33 6 | 33 1 | 33 3 | 33 0 | 33 5 | 33 1 | 33 1 | 325 | 331 | 332 | 332 | 315 | 337 | 276 | 330 |
| Melt viscosity of an LCP (Pa.s) | | 25. 1 | 25. 7 | 24. 8 | 25. 3 | 24. 8 | 25. 3 | 24. 6 | 25. 0 | 24.4 | 25.8 | 24.8 | 24.5 | 25.4 | 25.1 | 25.0 | 24.8 |
| Melting point of an LCP (°C) | | 35 2 | 34 5 | 34 1 | 34 2 | 34 1 | 34 7 | 34 2 | 34 0 | 335 | 342 | 344 | 343 | 324 | 352 | 279 | 338 |
| Melting enthalpy of an LCP (J/g) | | 2.1 4 | 2.5 4 | 2.0 4 | 1.8 9 | 2.6 2 | 2.0 8 | 1.9 2 | 2.6 0 | 1.21 | 1.33 | 1.40 | 1.26 | 0.82 | 0.84 | 0.66 | 0.58 |
| HDT of an LCP (°C) | | 30 0 | 30 2 | 29 5 | 29 3 | 30 5 | 29 7 | 29 4 | 30 3 | 276 | 281 | 282 | 280 | 258 | 266 | 177 | 240 |
| Bubbling rate (%) | | 0 | 0 | 0 | 0 | 0 | 0 | 0 | 0 | 20 | 20 | 10 | 20 | 30 | 60 | 80 | 50 |

It can be seen from the comparison of results of Examples 1 to 3 and 6 to 7 and Comparative Examples 4 to 8 in Table 1 that the optimization of types and amounts of polymer monomers in the present disclosure is conducive to improvement of a melting enthalpy of an LCP to increase an HDT and reduce a bubbling rate, which is also a reason for the specific further limitation of "the LCP includes the following repeating units in mole percentages: (A) a repeating unit of formula (1), where Ar¹ is 2,6-naphthylene: 45 mol% to 65 mol%; (B) a repeating unit of formula (1), where Ar¹ is 1,4-phenylene: 1 mol% to 6 mol%; (C) a repeating unit of formula (2), where Ar² is 1,4-phenylene: 15 mol% to 26 mol%; and (D) a repeating unit of formula (3), where Ar³ is 4,4'-biphenylene: 15 mol% to 26 mol%" in the present disclosure.

It can be seen from the results of Examples 2, 4, and 8 and Comparative Example 3 that the melt polycondensation at a constant temperature of 280°C to 300°C for 15 min to 30 min during preparation of the LCP is conducive to improving the melting enthalpy of the LCP, thereby increasing HDT and reducing foam generation rate.

It can be seen from the results of Examples 2 and 5 and Comparative Examples 1 and 2 that, compared with the use of magnesium acetate as a catalyst in Comparative Example 1, the use of a 1-methylimidazole acetate IL as a catalyst in the present disclosure leads to a high acylation rate and is conducive to acquisition of an LCP with a high melting enthalpy, a high HDT, and a low bubbling rate. When an amount of the 1-methylimidazole acetate IL added is 500 ppm or more of a theoretical yield of the LCP, a prominent effect can be allowed.

### Examples 1' to 11' and Comparative Examples 1' to 3': LCP compositions

According to the ratio in Table 2, the LCP in each of Examples 1 to 4 and Comparative Example 1 and a reinforcing filler were thoroughly mixed in a high-speed mixer, then fed into a twin-screw extruder, and subjected to melt mixing, extrusion granulation, and cooling to obtain an LCP composition.

The raw material components, melting enthalpies, HDTs, bubbling rates, and tensile strengths of the LCP compositions obtained in Examples 1' to 11' and Comparative Examples 1' to 3' were shown in Table 2.

**Table 2**

| | Exa mple 1' | Exa mple 2' | Exa mple 3' | Exa mple 4' | Exa mple 5' | Exa mple 6' | Exa mple 7' | Exa mple 8' | Exa mple 9' | Exa mple 10' | Exa mple 11' | Compa rative Examp le 1' | Compa rative Examp le 2' | Compa rative Examp le 3' |
|---|---|---|---|---|---|---|---|---|---|---|---|---|---|---|
| LCP name | 1 | 2 | 3 | 4 | 2 | 2 | 2 | 2 | 2 | 2 | 2 | 9 | 2 | 2 |
| Meltin g enthal py of an LCP (J/g) | 2.14 | 2.54 | 2.04 | 1.89 | 2.54 | 2.54 | 2.54 | 2.54 | 2.54 | 2.54 | 2.54 | 1.21 | 2.54 | 2.54 |
| Conte nt of an LCP (parts by weight ) | 80 | 80 | 80 | 80 | 50 | 80 | 80 | 80 | 80 | 80 | 80 | 80 | 40 | 90 |
| Conte nt of a glass fiber (parts by weight ) | 15 | 15 | 15 | 15 | 15 | 15 | 15 | 15 | 15 | 15 | 15 | 15 | 15 | 10 |
| Lengt h of a glass fiber (µm) | 2000 | 20 | 2000 | 2000 | 2000 | 2000 | 2000 | 2000 | 10 | 3000 | 2000 | 2000 | 2000 | 2000 |
| Conte nt of a non-fi brous reinfor cing filler (parts by weight ) | 5 | 5 | 5 | 5 | 35 | 5 | 5 | 5 | 5 | 5 | 5 | 5 | 45 | 0 |
| Type of a non-fi brous reinfor cing filler | Talc | Talc | Talc | Talc | Talc | Talc | Mica pow der | Titan ium dioxi de | Talc | Talc | Talc | Talc | Talc | Talc |
| Avera ge particl e size of a non-fi brous filler (µm) | 100 | 100 | 100 | 100 | 100 | 100 | 100 | 100 | 100 | 100 | 110 | 100 | 100 | 100 |
| Meltin g enthal py (J/g) | 1.71 | 1.98 | 1.63 | 1.55 | 1.22 | 1.75 | 1.20 | 1.32 | 1.41 | 1.18 | 1.63 | 0.97 | 0.95 | 1.16 |
| HDT (°C) | 301 | 304 | 300 | 299 | 296 | 302 | 295 | 297 | 298 | 291 | 300 | 273 | 263 | 285 |
| Bubbli ng rate (%) | 0 | 0 | 0 | 0 | 0 | 0 | 0 | 0 | 0 | 0 | 10 | 30 | 10 | 0 |
| Tensil e strengt h (Mpa) | 176 | 192 | 195 | 188 | 198 | 186 | 179 | 183 | 155 | 161 | 182 | 178 | 142 | 133 |

It can be seen from results of Example 1', 3', and 4' and Comparative Example 1' that, with the same LCP amount and the same reinforcing filler type and amount, a high melting enthalpy of the LCP leads to a high melting enthalpy, a high HDT, and a low bubbling rate of the LCP composition.

It can be seen from the results of Example 5' and Comparative Examples 2' and 3' that, with a melting enthalpy of the LCP unchanged, when the LCP and the reinforcing filler are used in a specified ratio, a prepared LCP composition can have excellent heat resistance, anti-bubbling performance, and mechanical performance. Therefore, it is specifically further limited in the present disclosure that "the LCP composition includes the following components in parts by weight: an LCP: 50 to 80 parts; and a reinforcing filler: 20 to 50 parts".

It can be seen from results of Examples 2', 6', 9', and 10' that, when the average length of the glass fiber is in a specified range, the prepared LCP composition can have both excellent HDT and excellent mechanical tensile performance.

It can be seen from results of Examples 6' to 8' and 11' that, because the non-fibrous reinforcing fillers such as talc, mica powder, and titanium dioxide have a too-large average particle size, the anti-bubbling performance of the prepared LCP composition deteriorates.

Finally, it should be noted that the above examples are provided merely to describe the technical solutions of the present disclosure, rather than to limit the protection scope of the present disclosure. Although the present disclosure is described in detail with reference to preferred examples, a person of ordinary skill in the art should understand that modifications or equivalent replacements may be made to the technical solutions of the present disclosure without departing from the scope of the technical solutions of the present disclosure.

## Claims

1. A preparation method of a liquid crystal polyester comprising a repeating unit of formula (1), a repeating unit of formula (2), and a repeating unit of formula (3):
(1) -O-Ar¹-CO-;
(2) -CO-Ar²-CO-;
and
(3) -O-Ar³-O-;
wherein
the liquid crystal polyester comprises the following repeating units in mole percentages:
(A) the repeating unit of formula (1), wherein Ar¹ is 2,6-naphthylene: 45 mol% to 65 mol%;
(B) the repeating unit of formula (1), wherein Ar¹ is 1,4-phenylene: 1 mol% to 6 mol%;
(C) the repeating unit of formula (2), wherein Ar² is 1,4-phenylene: 15 mol% to 26 mol%; and
(D) the repeating unit of formula (3), wherein Ar³ is 4,4'-biphenylene: 15 mol% to 26 mol%; and
the liquid crystal polyester has a melting enthalpy of more than 1.5 J/g, wherein the melting enthalpy is obtained by calculating a melting peak area from a second melting curve obtained by differential scanning calorimetry;
the preparation method of the liquid crystal polyester comprises the following steps:
S1. subjecting a monomer of the repeating unit of formula (1), a monomer of the repeating unit of formula (3), and an acylating agent to an acylation reaction under catalysis of an ionic liquid;
S2. subjecting a product of the acylation reaction of S1 and a monomer of the repeating unit of formula (2) to melt polycondensation and vacuum polycondensation under catalysis of the ionic liquid to obtain a prepolymer, wherein during the melt polycondensation, a constant temperature of 280°C to 300°C is maintained for 15 min or more; and
S3. discharging, cooling, curing, and granulating the prepolymer, and conducting solid-state polymerization to obtain the liquid crystal polyester, wherein
the ionic liquid is obtained through a reaction between a heterocyclic organic base compound with two or more nitrogen atoms and an anionic functional compound, and an amount of the ionic liquid added is 500 ppm or more of
a theoretical yield of the liquid crystal polyester.

2. The preparation method of the liquid crystal polyester according to claim 1, wherein the liquid crystal polyester comprises the following repeating units in mole percentages:
(A) the repeating unit of formula (1), wherein Ar¹ is 2,6-naphthylene: 45 mol% to 60 mol%;
(B) the repeating unit of formula (1), wherein Ar¹ is 1,4-phenylene: 1 mol% to 5 mol%;
(C) the repeating unit of formula (2), wherein Ar² is 1,4-phenylene: 19 mol% to 26 mol%; and
(D) the repeating unit of formula (3), wherein Ar³ is 4,4'-biphenylene: 19 mol% to 26 mol%.

3. The preparation method of the liquid crystal polyester according to claim 1, wherein the heterocyclic organic base compound with two or more nitrogen atoms is selected from the group consisting of an imidazole compound, a triazole compound, and a bipyridyl compound, wherein the imidazole compound is selected from the group consisting of 1-methylimidazole, 2-methylimidazole, 4-methylimidazole, 1-ethylimidazole, 2-ethylimidazole, 4-ethylimidazole, 1,2-dimethylimidazole, 1,4-dimethylimidazole, and 2,4-dimethylimidazole.

4. The preparation method of the liquid crystal polyester according to claim 1, wherein the anionic functional compound is selected from the group consisting of acetic acid, propionic acid, and butyric acid.

5. The preparation method of the liquid crystal polyester according to claim 1, wherein in Step S2, during the melt polycondensation, the constant temperature of 280°C to 300°C is maintained for 15 min to 30 min.

6. The preparation method of the liquid crystal polyester according to claim 1, wherein the amount of the ionic liquid added is 500 ppm to 3,000 ppm of the theoretical yield of the liquid crystal polyester.

7. The preparation method of the liquid crystal polyester according to claim 3, wherein the imidazole compound is 1-methylimidazole.

8. The preparation method of the liquid crystal polyester according to claim 4, wherein the anionic functional compound is acetic acid.

9. A liquid crystal polyester, prepared by the preparation method of the liquid crystal polyester according to any one of claims 1 to 8.

10. A liquid crystal polyester composition, comprising the following components in parts by weight:
| | |
|---|---|
| the liquid crystal polyester according to claim 9 | 50 to 80 parts; and |
| a reinforcing filler | 20 to 50 parts, |
the liquid crystal polyester composition has a melting enthalpy of over 1.0 J/g, and the melting enthalpy is obtained by calculating a melting peak area from a second melting curve obtained by differential scanning calorimetry.

11. Use of the liquid crystal polyester composition according to claim 10 in fields of automobiles, home appliances, communication devices, and electronics.

## Patentansprüche

1. Verfahren zum Herstellen eines Flüssigkristallpolyesters, der eine Wiederholungseinheit der Formel (1), eine Wiederholungseinheit der Formel (2) und eine Wiederholungseinheit der Formel (3) aufweist:
(1) -O-Ar¹-CO-;
(2) -CO-Ar²-CO-;
und
(3) -O-Ar³-O-,
wobei der Flüssigkristallpolyester die folgenden Wiederholungseinheiten in Molprozent aufweist:
(A) die Wiederholungseinheit der Formel (1), wobei Ar¹ 2,6-Naphthylen ist: 45 Mol-% bis 65 Mol%;
(B) die Wiederholungseinheit der Formel (1), wobei Ar¹ 1,4-Phenylen ist: 1 Mol-% bis 6 Mol%;
(C) die Wiederholungseinheit der Formel (2), wobei Ar² 1,4-Phenylen ist: 15 Mol-% bis 26 Mol%; und
(D) die Wiederholungseinheit der Formel (3), wobei Ar³ 4,4'-Biphenylen ist: 15 Mol-% bis 26 Mol%; und
der Flüssigkristallpolyester eine Schmelzenthalpie von mehr als 1,5 J/g aufweist, wobei die Schmelzenthalpie durch Berechnen einer Schmelzpeakfläche aus einer zweiten Schmelzkurve erhalten wird, die durch Differential-Scanning-Kalorimetrie erhalten wird;
wobei das Verfahren zum Herstellen des Flüssigkristallpolyesters die folgenden Schritte aufweist:
S1. Unterziehen eines Monomers der Wiederholungseinheit der Formel (1), eines Monomers der Wiederholungseinheit der Formel (3) und eines Acylierungsmittels einer Acylierungsreaktion unter Katalyse einer ionischen Flüssigkeit;
S2. Unterziehen eines Produkts der Acylierungsreaktion von S1 und eines Monomers der Wiederholungseinheit der Formel (2) einer Schmelzpolykondensation und einer Vakuumpolykondensation unter Katalyse der ionischen Flüssigkeit, um ein Prepolymer zu erhalten, wobei während der Schmelzpolykondensation eine konstante Temperatur von 280°C bis 300°C für 15 Minuten oder länger aufrechterhalten wird; und
S3. Entladen, Kühlen, Härten und Granulieren des Prepolymers und Ausführen einer Festphasenpolymerisation, um den Flüssigkristallpolyester zu erhalten,
wobei die ionische Flüssigkeit durch eine Reaktion zwischen einer heterocyclischen organischen Basenverbindung mit zwei oder mehr Stickstoffatomen und einer anionischen funktionellen Verbindung erhalten wird und wobei eine Menge der zugegebenen ionischen Flüssigkeit 500 ppm oder mehr einer theoretischen Ausbeute des Flüssigkristallpolyesters beträgt.

2. Verfahren nach Anspruch 1, wobei der Flüssigkristallpolyester die folgenden Wiederholungseinheiten in Molprozent enthält:
(A) die Wiederholungseinheit der Formel (1), wobei Ar¹ 2,6-Naphthylen ist: 45 Mol-% bis 60 Mol%;
(B) die Wiederholungseinheit der Formel (1), wobei Ar¹ 1,4-Phenylen ist: 1 Mol-% bis 5 Mol%;
(C) die Wiederholungseinheit der Formel (2), wobei Ar² 1,4-Phenylen ist: 19 Mol-% bis 26 Mol-%; und
(D) die Wiederholungseinheit der Formel (3), wobei Ar³ 4,4'-Biphenylen ist: 19 Mol-% bis 26 Mol-%.

3. Verfahren nach Anspruch 1, wobei die heterocyclische organische Basenverbindung mit zwei oder mehr Stickstoffatomen ausgewählt ist aus der Gruppe bestehend aus einer Imidazolverbindung, einer Triazolverbindung und einer Bipyridylverbindung, wobei die Imidazolverbindung ausgewählt ist aus der Gruppe bestehend aus 1-Methylimidazol, 2-Methylimidazol, 4-Methylimidazol, 1-Ethylimidazol, 2-Ethylimidazol, 4-Ethylimidazol, 1,2-Dimethylimidazol, 1,4-Dimethylimidazol und 2,4-Dimethylimidazol.

4. Verfahren nach Anspruch 1, wobei die anionische funktionelle Verbindung ausgewählt ist aus der Gruppe bestehend aus Essigsäure, Propionsäure und Buttersäure.

5. Verfahren nach Anspruch 1, wobei in Schritt S2 während der Schmelzpolykondensation die konstante Temperatur von 280°C bis 300°C für 15 min bis 30 min aufrechterhalten wird.

6. Verfahren nach Anspruch 1, wobei die Menge der zugegebenen ionischen Flüssigkeit 500 ppm bis 3000 ppm der theoretischen Ausbeute des Flüssigkristallpolyesters beträgt.

7. Verfahren nach Anspruch 3, wobei die Imidazolverbindung 1-Methylimidazol ist.

8. Verfahren nach Anspruch 4, wobei die anionische funktionelle Verbindung Essigsäure ist.

9. Flüssigkristallpolyester, hergestellt durch das Verfahren zum Herstellen eines Flüssigkristallpolyesters nach einem der Ansprüche 1 bis 8.

10. Flüssigkristallpolyesterzusammensetzung, aufweisend die folgenden Komponenten in Gewichtsteilen:
den Flüssigkristallpolyester nach Anspruch 9: 50 bis 80 Teile; und
einen verstärkenden Füllstoff: 20 bis 50 Teile,
wobei die Flüssigkristallpolyesterzusammensetzung eine Schmelzenthalpie von über 1,0 J/g aufweist und die Schmelzenthalpie durch Berechnen einer Schmelzpeakfläche aus einer zweiten Schmelzkurve erhalten wird, die durch Differential-Scanning-Kalorimetrie erhalten wird.

11. Verwendung der Flüssigkristallpolyesterzusammensetzung nach Anspruch 10 in den Bereichen Automobil, Haushaltsgeräte, Kommunikationsgeräte und Elektronik.

## Revendications

1. Procédé de préparation d'un polyester cristallin liquide comprenant un motif de répétition de formule (1), un motif de répétition de formule (2) et un motif de répétition de formule (3) :
(1) -O-Ar¹-CO- ;
(2) -CO-Ar²-CO- ;
et
(3) -O-Ar³-O- ;
dans lequel
le polyester cristallin liquide comprend les motifs de répétition suivants en pourcentages molaires :
(A) le motif de répétition de formule (1), dans lequel Ar¹ représente le 2,6-naphtylène : 45 % molaires à 65 % molaires ;
(B) le motif de répétition de formule (1), dans lequel Ar¹ représente le 1,4-phénylène : 1 % molaire à 6 % molaires ;
(C) le motif de répétition de formule (2), dans lequel Ar² représente le 1,4-phénylène : 15 % molaires à 26 % molaires ; et
(D) le motif de répétition de formule (3), dans lequel Ar³ représente le 4,4'-biphénylène : 15 % molaires à 26 % molaires ;
et
le polyester cristallin liquide a une enthalpie de fusion de plus de 1,5 J/g, dans lequel l'enthalpie de fusion est obtenue en calculant une aire de pic de fusion à partir d'une seconde courbe de fusion obtenue par colorimétrie différentielle à balayage ;
le procédé de préparation du polyester cristallin liquide comprend les étapes suivantes consistant à :
S1. soumettre un monomère du motif de répétition de formule (1), un monomère du motif de répétition de formule (3) et un agent d'acylation à une réaction d'acylation sous catalyse par un liquide ionique ;
S2. soumettre un produit de la réaction d'acylation de S1 et d'un monomère du motif de répétition de formule (2) à polycondensation à l'état fondu et polycondensation sous vide sous catalyse du liquide ionique pour obtenir un prépolymère, dans lequel pendant la polycondensation à l'état fondu, une température constante de 280 °C à 300 °C est maintenue pendant 15 minutes ou plus ; et
S3. décharger, refroidir, faire durcir et granuler le prépolymère, et mener une polymérisation à l'état solide pour obtenir le polyester cristallin liquide, dans lequel
le liquide ionique est obtenu par une réaction entre un composé de base organique hétérocyclique avec deux atomes d'azote ou plus et un composé fonctionnel anionique, et une quantité du liquide ionique ajoutée est de 500 ppm ou plus d'un rendement théorique du polyester cristallin liquide.

2. Procédé de préparation du polyester cristallin liquide selon la revendication 1, dans lequel le polyester cristallin liquide comprend les motifs de répétition suivants en pourcentages molaires :
(A) le motif de répétition de formule (1), dans lequel Ar¹ représente le 2,6-naphtylène : 45 %molaires à 60 % molaires ;
(B) le motif de répétition de formule (1), dans lequel Ar¹ représente le 1,4-phénylène : 1 % molaire à 5 % molaires ;
(C) le motif de répétition de formule (2), dans lequel Ar² représente le 1,4-phénylène : 19 % molaires à 26 % molaires ; et
(D) le motif de répétition de formule (3), dans lequel Ar³ représente le 4,4'-biphénylène : 19 % molaires à 26 % molaires.

3. Procédé de préparation du polyester cristallin liquide selon la revendication 1, dans lequel le composé de base organique hétérocyclique avec deux atomes d'azote ou plus est choisi dans le groupe constitué par un composé imidazole, un composé triazole et un composé bipyridyle, dans lequel le composé imidazole est choisi dans le groupe constitué par le 1-méthylimidazole, le 2-méthylimidazole, le 4-méthylimidazole, le 1-éthylimidazole, le 2-éthylimidazole, le 4-éthylimidazole, le 1,2-diméthylimidazole, le 1,4-diméthylimidazole et le 2,4-diméthylimidazole.

4. Procédé de préparation du polyester cristallin liquide selon la revendication 1, dans lequel le composé fonctionnel anionique est choisi dans le groupe constitué par l'acide acétique, l'acide propionique et l'acide butyrique.

5. Procédé de préparation du polyester cristallin liquide selon la revendication 1, dans lequel dans l'étape S2, pendant la polycondensation à l'état fondu, la température constante de 280 °C à 300 °C est maintenue pendant 15 minutes à 30 minutes.

6. Procédé de préparation du polyester cristallin liquide selon la revendication 1, dans lequel la quantité du liquide ionique ajouté est de 500 ppm à 3000 ppm du rendement théorique du polyester cristallin liquide.

7. Procédé de préparation du polyester cristallin liquide selon la revendication 3, dans lequel le composé imidazole est le 1-méthylimidazole.

8. Procédé de préparation du polyester cristallin liquide selon la revendication 4, dans lequel le composé fonctionnel anionique est l'acide acétique.

9. Polyester cristallin liquide, préparé par le procédé de préparation du polyester cristallin liquide selon l'une quelconque des revendications 1 à 8.

10. Composition de polyester cristallin liquide, comprenant les constituants suivants en parts en masse :
| | |
|---|---|
| le polyester cristallin liquide selon la revendication 9 | 50 à 80 parts ; et |
| une charge de renfort | 20 à 50 parts, |
la composition de polyester cristallin liquide a une enthalpie de fusion dépassant 1,0 J/g, et l'enthalpie de fusion est obtenue en calculant une aire de pic de fusion à partir d'une seconde courbe de fusion obtenue par colorimétrie différentielle à balayage.

11. Utilisation de la composition de polyester cristallin liquide selon la revendication 10 dans les domaines des automobiles, des appareils ménagers, des dispositifs de communication et de l'électronique.
